# EUROPEAN PATENT APPLICATION

(11) **EP 3 842 284 A1**
(43) Date of publication of application: **30.06.2021**
(21) Application number: 20172166.9
(22) Date of filing: 29.04.2020
(51) Int. Cl.: B60N 2/66

(54) **LUMBAR SUPPORT FOR VEHICLE SEAT**

(30) Priority: 26.12.2019 KR 20190174802
(71) Applicant: Gumchang Co., Ltd., Gyeongsangbuk-do (KR)
(72) Inventor: SONG, Jae Yel, 205-1009 Daegu (KR); CHOI, Hai Tai, 105-501 Gyeongsangbuk-do (KR); SONG, Chae Sung, 203-803 Daegu (KR); SHIN, Se Gil, 309-1005 Daegu (KR); KIM, Min Sung, 103-511 Daegu (KR)
(74) Representative: Mathys & Squire

(57) **Abstract**

Provided is a lumbar support disposed in a vehicle seat and supporting the user's lumbar vertebra. According to the present invention, there may be provided a lumbar support for a vehicle seat that includes: a support panel configured to support the user's back; first and second wires configured to support a lower portion of the support panel; a tow wheel winding the first and second wires on a circumferential surface thereof with ends of the first and second wires fixed thereto; and an actuator configured to rotate the tow wheel, in which the tow wheel has: a first wire guide groove extending around the circumferential surface to wind the first wire; and a second wire guide groove extending around the circumferential surface at a different position from the first wire guide groove in a thickness direction to wind the second wire. The lumbar support for a vehicle seat according to the present invention can improve sitting comfort by appropriately changing a force that supports the lumbar vertebra.

## Description

### BACKGROUND OF THE INVENTION

### Field of the Invention

The present invention relates to a lumbar support for a vehicle seat, the lumber support disposed in a vehicle seat and supporting the user's lumbar vertebra.

### Description of the Related Art

A vehicle seat is configured to be able to appropriately adjust the position, the angle, etc., depending on the physical condition of a user. As one of the components, a lumbar support is disposed in a vehicle seat. A lumbar support is configured to appropriately support the lumbar vertebra in which pressure concentrates when a user sits, thereby being able to improve sitting comfort and reduce fatigue.

Some lumbar supports are configured to be able to appropriately adjust the position thereof, depending on users. For example, lumbar supports that change the protrusive amount or the supporting force using a predetermined mechanical structure have been known. However, despite those various types known in the art, a lumbar support for improving sitting comfort are being developed and there is still many problems to solve.

### Citation List

### Patent Literature

Patent Literature 1: Korean Patent No. 10-1372957 (registered on March 10, 2014)
Patent Literature 2: Korean Patent No. 10-0636402 (registered on October 12, 2006)

### SUMMARY OF THE INVENTION

Embodiments of the present invention provide a lumbar support for a vehicle seat which can improve sitting comfort or operating comfort.

According to an aspect of the present invention, there may be provided a lumbar support for a vehicle seat that includes: a support panel configured to support the user's back; first and second wires configured to support a lower portion of the support panel; a tow wheel winding the first and second wires on a circumferential surface thereof with ends of the first and second wires fixed thereto; and an actuator configured to rotate the tow wheel, in which the tow wheel has: a first wire guide groove extending around the circumferential surface to wind the first wire; and a second wire guide groove extending around the circumferential surface at a different position in a thickness direction from the first wire guide groove to wind the second wire.

### BRIEF DESCRIPTION OF THE DRAWINGS

FIG. 1 is a schematic view showing a lumbar support for a vehicle seat according to an embodiment of the present invention;
FIG. 2 is an enlarged view of the support panel shown in FIG. 1;
FIG. 3 is an enlarged view of the actuator shown in FIG. 1;
FIG. 4 is an enlarged view of the tow wheel shown in FIG. 1; and
FIG. 5 is a schematic view of first and second wire guide grooves shown in FIG. 4.

### DETAILED DESCRIPTION OF THE PREFERRED EMBODIMENTS

Hereinafter, embodiments of the present invention are described with reference to the accompanying drawings. However, it should be noted that the following embodiments are provided to help understand the present invention, and the scope of the present invention is not limited by the following embodiments. The following embodiments are provided to more completely explain the present invention to those skilled in the art, and well-known configurations that are determined to unnecessarily make the spirit of the present invention unclear are not described in detail.

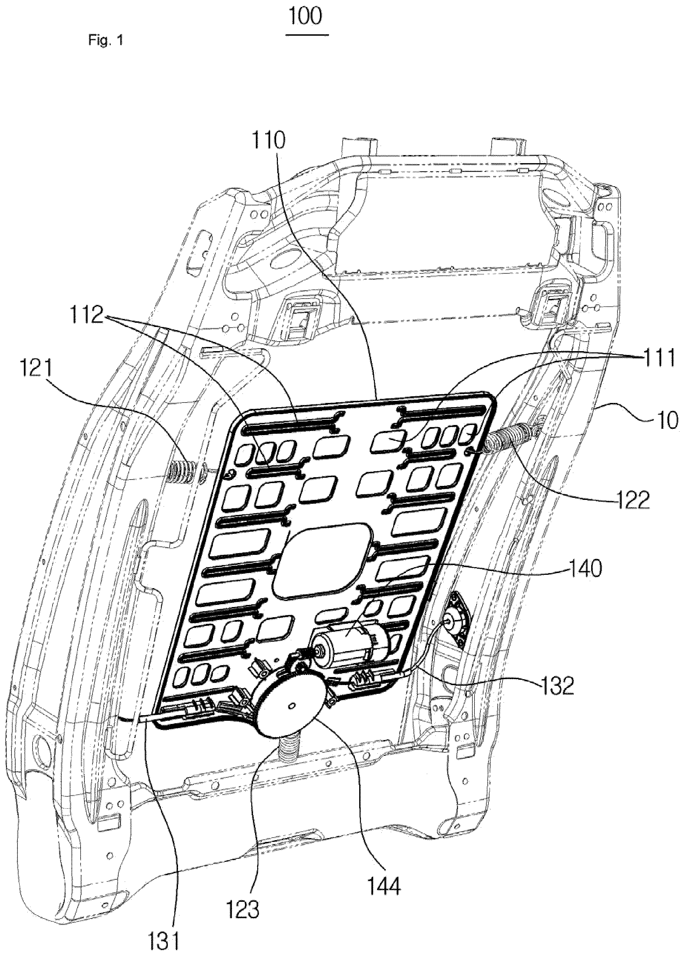

FIG. 1 is a schematic view showing a lumbar support for a vehicle seat according to an embodiment of the present invention.

For reference, FIG. 1 shows a vehicle seat when seen from the rear.

Referring to FIG. 1, a lumbar support (hereafter, referred to as "lumbar support 100") for a vehicle seat of the embodiment is for appropriately supporting the user's lumbar vertebra and may be disposed on a seat back frame 10. The force of the lumbar support 100 of the embodiment supporting the lumbar vertebra can be changed substantially at the lower end area of the seat back by an operation by a user, etc., and the supporting force can be adjusted by wires 131 and 132. The lumbar support 100 of the embodiment has a supporting force variation structure that uses the wires 131 and 132, whereby, as compared with the types using mechanical structures or shapes in the related art, it is possible to precisely adjust the supporting force and achieve natural operating comfort and using comfort.

The configuration of the lumbar support 100 of the embodiment is described in detail hereafter.

Referring to FIG. 1, the lumbar support 100 of the embodiment may include a support panel 110.

The support panel 110 can provide a supporting structure for supporting the user's lumbar vertebra or back. The support panel 110 may be made of a material having predetermined rigidity to be able to provide a sufficient supporting force. For example, the support panel 110 may be made of a metal material such as steel or a plastic material having predetermined rigidity.

The support panel 110 may extend with a sufficient supporting surface to correspond to the user's lumbar vertebra or back. In the embodiment, it is exemplified that the support panel 110 has a rectangular plate shape extending up/down and left/right. In this case, the left-right width of the support panel 110 may be 60∼80% of the entire width of the support panel 110, and the up-down height of the support panel 110 may be 50∼70% of the entire height of the support panel 110. This is for enabling variation of the supporting force to be described below when the support panel 110 supports the user's lumbar vertebra or back with a sufficiently large contact area. It is compared with the common lumbar supports partially supporting the lumbar vertebra with a small area in the related art.

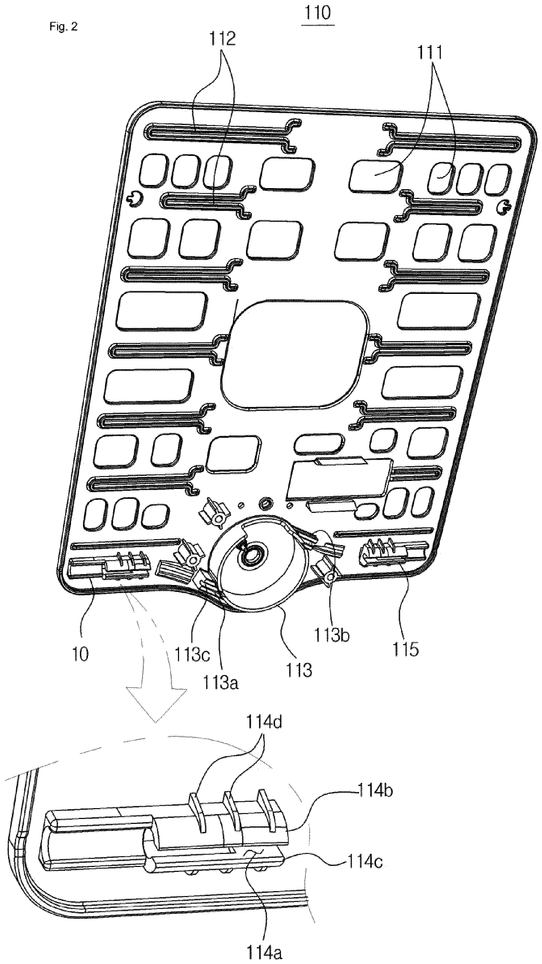

FIG. 2 is an enlarged view of the support panel shown in FIG. 1.

Referring to FIG. 2, the support panel 110 may be formed in a plate shape having a predetermined area. A plurality of panel holes 111 may be formed through the support panel 110. The panel holes 111 enable reduction of the weight of the support panel 110 by a predetermined amount and can make elastic deformation of the support panel 110 easy. In the embodiment, the panel holes 111 are exemplified as having different sizes and shapes, but the sizes and shapes of the panel holes 111 are not specifically limited and are not necessarily limited to the example.

A plurality of panel grooves 112 may be formed on the support panel 112. The panel grooves 112 may be formed such that the outer side of the support panel 110 is recessed or protrudes by a predetermined amount. The panel grooves 112 may laterally extend a predetermined length on the support panel 110. A plurality of panel grooves 112 may be provided, and the panel grooves 112 may be distributed with a predetermined gap throughout the area of the support panel 110. Preferably, the panel grooves 112 may be symmetrically disposed left and right with the left-right center of the support panel 110 as an axis. Such panel grooves 112 can increase the rigidity of the support panel 110.

A worm wheel bracket 113 may be disposed at the center of the lower portion of the support panel 110. The worm wheel bracket 113 can provide a mounting space of a worm wheel 144 to be described below. The worm wheel bracket 113 may be formed in a shape protruding a predetermined height from the support panel 110 along a substantially circular edge and defining a circular mounting space.

A first wire guide 113a may be disposed at a side of the worm wheel bracket 113 and a second wire guide 113b corresponding to the first wire guide 113a may be disposed at the opposite side. According to the figures, the first wire guide 113a is disposed in the left area of the worm wheel bracket 113 and the second wire guide 113b is disposed in the right area of the worm wheel bracket 113. The first and second wire guides 113a and 113b may substantially tangentially extend from the circumference of the worm wheel bracket 113, and each may have a guide groove 113c for guiding wires 131 and 132.

First and second wire brackets 114 and 115 may be disposed at the left and right sides of the lower portion of the support panel 110 with the worm wheel bracket 113 therebetween. According to the figures, the first wire bracket 114 is spaced to the left side of the worm wheel bracket 113 and disposed adjacent to the lower end of the support panel 110, and the second wire bracket 115 is spaced to the right side of the worm wheel bracket 113 and disposed adjacent to the lower end of the support panel 110.

The first and second wire brackets 114 and 115 are provided to mount the wires 131 and 132 and may have an upper bracket 114b and a lower bracket 114c spaced a predetermined gap up and down apart from each other with an inlet 114a therebetween. The upper and lower brackets 114b and 114c can define mounting spaces of the wires 131 and 132 by extending in an arc shape, and a plurality of reinforcing ribs 114d may be disposed between the brackets and the support panel 110. The wires 131 and 132 are inserted through the inlet 114a, whereby they can be mounted in the first and second wire brackets 114 and 115.

Referring to FIG. 1 again, the lumbar support 100 of the embodiment may include first to third tension springs 121, 122, and 123.

The first and second tension springs 121 and 122 can elastically support the upper portion of the support panel 110. The first and second tension springs 121 and 122 is connected between the seat back frame 10 and the support panel 110 and can elastically support the support panel 110 with respect to the seat back frame 10. The first and second tension springs 121 and 122 may be spaced left and right apart from each other with the support panel 110 therebetween. According to the figure, the first tension spring 121 at the left side elastically supports the left upper portion of the support panel 110 and the second tension spring 122 at the right side elastically supports the right upper portion of the support panel 110.

The third tension spring 123 can elastically support the lower portion of the support panel 110. The third tension spring 123 is connected between the seat back frame 10 and the support panel 110 at the center of the lower end of the support panel 110, thereby being able to elastically support the support panel 110 with respect to the seat back frame 10.

The lumbar support 100 of the embodiment may include first and second wires 131 and 132.

The first and second wires 131 and 132 can elastically support the lower portion of the support panel 110. The upper portion of the support panel 110 is supported by the first and second tension spring 121 and 122 described above and the lower portion thereof is supported by the first and second wires 131 and 132.

The first wire 131 may be fixed to the seat back frame 10 at an end and fastened to a tow wheel 150 to be described below at the opposite end. The second wire 132 may also be fixed to the seat back frame 10 at an end and fastened to a tow wheel 150 at the opposite end. That is, the first and second wires 131 and 132 may be symmetrically disposed at left and right sides with the tow wheel 150 therebetween. According to the figures, the first wire 131 is fixed to the seat back frame 10 at the left end fastened to the tow wheel 150 at the right end and the second wire 132 is fixed to the seat back frame 10 at the right end and fastened to the tow wheel 150 at the left end.

The first wire 131 is mounted on the first wire bracket 114 on the lower portion of the support panel 110 and can be guided to the tow wheel 150 through the first wire guide 113a. Similarly, the second wire 132 is mounted in the second wire bracket 115 and can be guided to the tow wheel 150 through the second wire guide 113b (see FIG. 2).

The first and second wires 131 and 132 are each fixed to the seat back frame 10 at an end, so the tension thereof can be appropriately adjusted by the operation of the tow wheel 150. According to the lumbar support 100 of the embodiment, it is possible to change the force supporting the lumbar vertebra. This function will be described below in association with the tow wheel 150 to be described below, etc.

Meanwhile, the lumbar support 100 of the embodiment may include an actuator 140.

The actuator 140 provides power for adjusting the tension of the first and second wires 131 and 132. According to the figures, the tow wheel 150 connected with the first and second wires 131 and 132 is disposed at the center of the lower portion of the support panel 110, and the actuator 140 is disposed above and adjacent to the tow wheel 150. However, the actuator 140 may be disposed at any position as long as it can appropriately provide power to the tow wheel 150 and the position is not necessarily limited to the exemplary position.

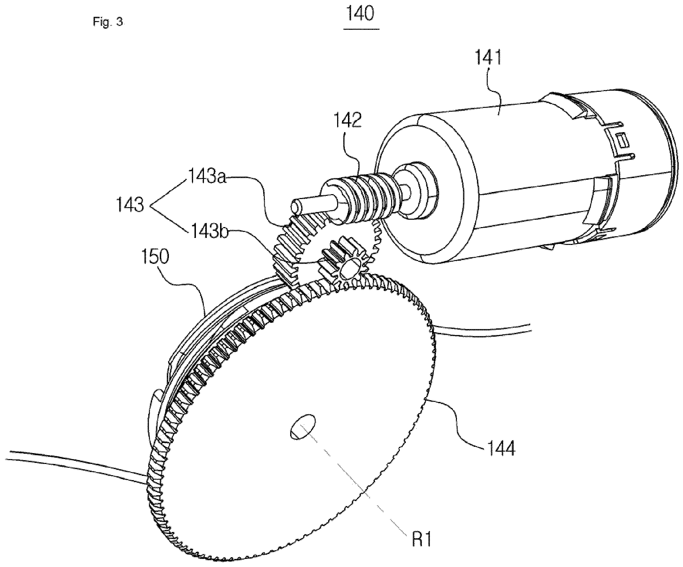

FIG. 3 is an enlarged view of the actuator shown in FIG. 1.

Referring to FIG. 3, the actuator 140 may include a driving motor 141, a worm 142, a transmission gear 143, and a worm wheel 144. The actuator 140 of the embodiment employs a worm-worm wheel gear structure for efficient power transmission.

The worm 142 provided in the driving motor 141 is engaged with the transmission gear 143, thereby being able to transmit power to the transmission gear 143. The transmission gear 143 is engaged with the worm wheel 144, thereby being able to transmit power to the worm wheel 144. The transmission gear 143 may include first and second gears 143a and 143b, in which the first gear 143a may be engaged with the worm 142 and the second gear 143b may be engaged with the worm wheel 144. The first and second gears 143a and 143b are spur gears and may be integrated as a single unit.

The gear ratio of the second gear 143b to the first gear 143a may be less than 1. For example, the gear ratio may be 0.5. This is for protecting the driving motor 141 from a reacting force that is transmitted through the worm wheel 144.

The driving motor 141 can rotate the worm wheel 144 about a rotational axis R1. The worm wheel 144 can be rotated with the tow wheel 150 to be described below. That is, the tow wheel 150 may be integrally formed with the worm wheel 144, or may be engaged with the worm wheel 144, thereby being able to rotate with the worm wheel 144 about the rotational axis R1. Though not shown in the figures, if necessary, a predetermined reduction gear, etc. may be further disposed between the worm wheel 144 and the tow wheel 150.

Referring to FIG. 1 again, the lumbar support 100 of the embodiment may include a tow wheel 150.

The tow wheel 150 may be disposed in the worm wheel bracket 113 at the center of the lower portion of the support panel 110 together with the worm wheel 144 (see FIG. 2). For reference, the tow wheel 150 is disposed ahead of the worm wheel 144 in FIG. 1. The tow wheel 150 can be rotated with the worm wheel 144 by the power transmitted through the worm wheel 144. In the embodiment, it is exemplified that the tow wheel 150 and the worm wheel 144 are rotated about the same rotational axis R1.

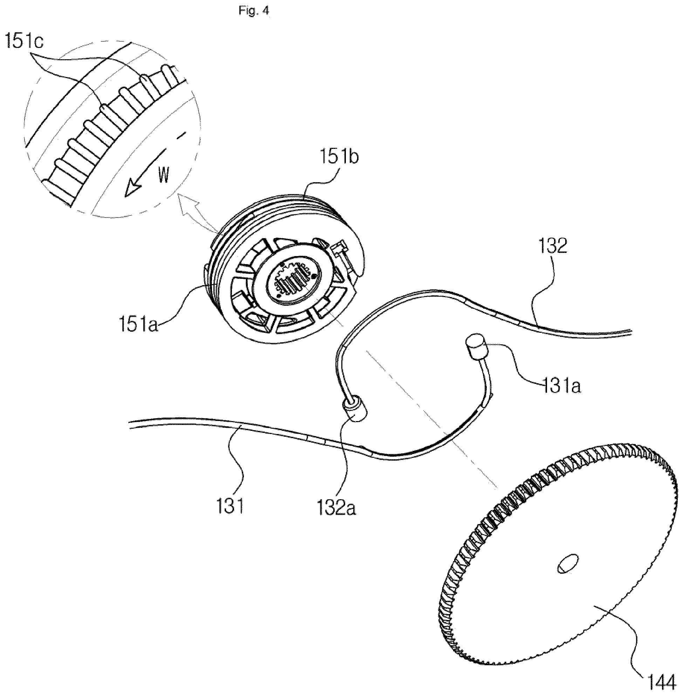

FIG. 4 is an enlarged view of the tow wheel shown in FIG. 1.

Referring to FIG. 4, the tow wheel 150 may have a circular disc shape having a diameter smaller by a predetermined amount than that of the worm wheel 144.

Wire guide grooves 151a and 151b may be formed on the circumferential surface of the tow wheel 150. The wire guide grooves 151a and 151b are recessed in a predetermined shape on the circumferential surface of the tow wheel 150 and may extend a predetermined length in an arc shape around the circumferential surface.

The wire guide grooves 151a and 151b may include first and second wire guide grooves 151a and 151b. The first wire guide groove 151a, which is for guiding the first wire 131, may extend a predetermined length in an arc shape around the circumferential surface of the tow wheel 150. The second wire guide groove 151b, which is for guiding the second wire 132, may extend a predetermined length in an arc shape around the circumferential surface of the tow wheel 150.

The first and second wire grooves 151a and 151b may be disposed at different positions in the thickness direction of the tow wheel 150. For example, the first wire guide groove 151a may be disposed ahead and the second wire guide groove 151b may be disposed behind in the thickness direction of the tow wheel 150. This is for winding the wires at different positions on the tow wheel 150 to prevent the first and second wires 131 and 132 from tangling.

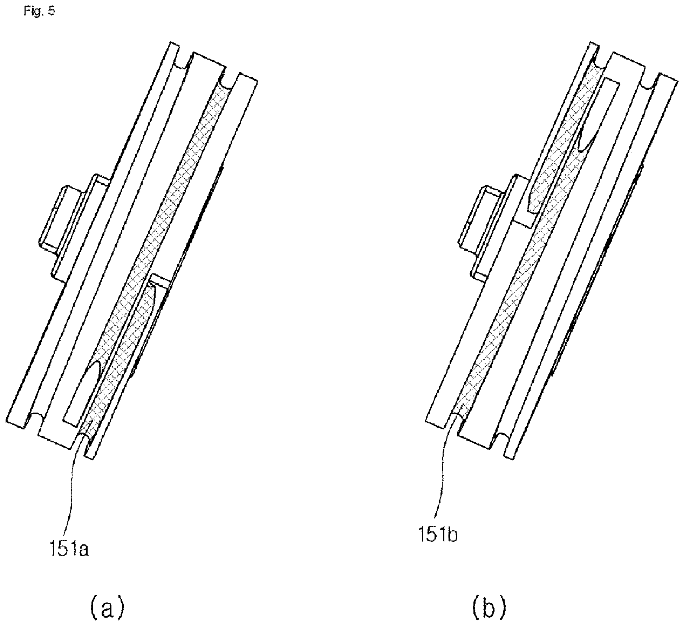

FIG. 5 is a schematic view of first and second wire guide grooves shown in FIG. 4.

For the convenience of understanding, FIG. 5 mainly shows the paths of the first and second wire guide grooves 151a and 151b without other components shown. FIG. 5(a) shows the path of the first wire guide groove 151a and FIG. 5(b) shows the path of the second wire guide groove 151b.

Referring to FIG. 5, the first and second wire guide grooves 151a and 151b may extend while making spiral paths. As for the first wire guide groove 151a first, the first wire guide groove 151a extends from a position adjacent to the front in the thickness direction of the tow wheel 150 and keeps extending at a predetermined angle toward the center in the thickness direction, thereby spirally extending. The second wire guide groove 151b, similarly, also extends from a position adjacent to the rear in the thickness direction of the tow wheel 150 and keeps extending at a predetermined angle toward the center in the thickness direction, thereby spirally extending.

In this case, the first and second wires 131 and 132 start to be wound from the outer sides in the thickness direction and then gradually move toward the center in the thickness direction, thereby being wound on the tow wheel 150.

The spiral first and second wire guide grooves 151a and 151b enable the first and second wires 131 and 132 to be wound on the tow wheel 150 along one path without overlapping each. For example, the first wire 131 is wound along the spiral first wire guide groove 151a, so if it is wound one or more round, it does not overlap the front end. Accordingly, tangling of the wires 131 and 132 can be effectively prevented when they are wound or unwound.

Further, the spirally wound first and second wires 131 and 132 may have a function of partially supporting a load that is applied through the support panel 110. That is, since the wires 131 and 132 are spirally wound and twisted by a predetermined amount on the tow wheel 150, the weight of a user, etc. that are transmitted from the support panel 110 can be partially supported by frictional contact between the wires 131 and 132 and the wire guide grooves 151a and 151b. Accordingly, the reacting force that is applied to the driving motor 141 can be decreased, and it is possible to effectively prevent the wires 131 and 132 from slightly unwinding and moving in a set state.

Further, the first and second wires 131 and 132 start to be wound from the outer sides in the thickness direction, and then are gradually gathered to the center as the support panel 110 is moved forward. Accordingly, even though the first and second wires 131 and 132 are positioned ahead and behind at the start points, but as they go to the maximum movement positions, they can be positioned ahead and behind close to each other. That is, as going to the maximum movement positions, the first and second wires 131 and 132 are gathered to the center in the thickness direction of the tow wheel 150. Accordingly, even though the first and second wires 131 and 132 are positioned ahead and behind at the start points, a user can less feel uncomfortable in operation.

Referring to FIG. 4 again, a first wire socket 131a may be disposed at an end of the first wire 131 and may be fastened to a first wire socket groove 152a formed on a side of the tow wheel 150. Accordingly, the end of the first wire 131 can be fixed to the tow wheel 150. Similarly, a second wire socket 1321a may be disposed at an end of the second wire 132 and may be fastened to a second wire socket groove 152b formed on a side opposite to the aforementioned side.

The tow wheel 150 is rotated by the actuator 140, thereby winding or unwinding the first and second wires 131 and 132 on the circumferential surface. When the tow wheel 150 is rotated in one direction by the actuator 140, the first wire 131 is inserted into the first wire guide groove 151a and wound on the circumferential surface of the tow wheel 150 and the second wire 132 is inserted into the second wire guide groove 151b and wound on the circumferential surface of the tow wheel 150. The tension and the supporting force of the first and second wires 131 and 132 can be changed by degree of winding on the tow wheel 150.

If necessary, locking protrusions 151c may be formed on the bottom side the first and second wire guide grooves 151a and 151b. FIG. 4 shows the locking protrusions 151c, for example, in the first wire guide groove 151a. The locking protrusions 151c may extend in a direction perpendicular to the winding direction W of the wires 131 and 132 and may be repeatedly formed on the bottom side the first and second wire guide grooves 151a and 151b. The locking protrusions 151c prevent a slip between the first and second wires 131 and 132 and the first and second wire guide grooves 151a and 151b and enable the first and second wire 131 and 132 to be more firmly wound in contact with the first and second wire guide grooves 151a and 151b.

The operation of the lumbar support 100 is described hereafter.

When a user operates the lumbar support 100, power is provided by the driving motor 141, and the worm wheel 144 and the tow wheel 150 are rotated in one direction. As the tow wheel 150 is rotated, the first and second wires 131 and 132 are inserted into the first and second wire guide grooves 151a and 151b and wound on the circumferential surface of the tow wheel 150. Further, when the worm wheel 144 and the tow wheel 150 are rotated in the opposite direction, the first and second wires 131 and 132 are unwound out of the first and second wire guide grooves 151a and 151b.

Accordingly, the tension of the first and second wires 131 and 132 is changed, and the supporting force and position of the lower portion of the support panel 110 can be adjusted. That is, when the first and second wires 131 and 132 are wound on the tow wheel 150, the tension of the first and second wires 131 and 132 increases and the lower portion of the support panel 110 is moved forward. On the contrary, when the first and second wires 131 and 132 are unwound from the tow wheel 150, the tension of the first and second wires 131 and 132 decreases and the support panel 110 can be returned to the initial position by the first to third tension springs 121, 122, and 123.

Accordingly, the lumbar support 100 of the embodiment can improve sitting comfort by appropriately adjusting the force that supports the lumbar vertebra in accordance with operation by a user, etc. Further, since the operation type that uses the wires 131 and 132 is applied, it is possible to more precisely and smoothly operate the lumbar support.

The lumbar support for a vehicle seat according to embodiments of the present invention can improve sitting comfort by appropriately changing a force that supports the lumbar vertebra in accordance with operation by a user, etc. Further, lumbar support for a vehicle seat according to embodiments of the present invention employs an operation type that uses the wires, so it is possible to more precisely and smoothly operate the lumbar support.

Although embodiments of the present invention were described above, those skilled in the art may change and modify the present invention in various ways by adding, changing, or removing components without departing from the spirit of the present invention described in claims, which should be understood as being included in the scope of the present invention.

## Claims

1. A lumbar support for a vehicle seat, comprising:
a support panel configured to support the user's back;
first and second wires configured to support a lower portion of the support panel;
a tow wheel winding the first and second wires on a circumferential surface thereof with ends of the first and second wires fixed thereto; and
an actuator configured to rotate the tow wheel,
wherein the tow wheel has:
a first wire guide groove extending around the circumferential surface to wind the first wire; and
a second wire guide groove extending around the circumferential surface at a different position in a thickness direction from the first wire guide groove to wind the second wire.

2. The lumbar support of claim 1, wherein the support panel has:
a plurality of panel holes formed through the front and back of the support panel;
a plurality of panel grooves recessed and protruding by a predetermined amount on an outer surface of the support panel and extending left and right;
a worm wheel bracket disposed at a lower portion of the support panel and providing a mounting space for the tow wheel; and
first and second wire brackets disposed at left and right sides with the worm wheel bracket as center to mount the first and second wires, respectively,
wherein the worm wheel bracket has:
a first wire guide tangentially extending from a side of a circumference of the worm wheel bracket; and
a second wire guide tangentially extending from another side of the circumference of the worm wheel bracket to correspond to the first wire guide,
wherein the first and second wire bracket have:
an upper bracket extending a predetermined length left and right on the support panel;
a lower bracket spaced a predetermined gap down apart from the upper bracket with an inlet therebetween, extending a predetermined length left and right, and defining a mounting space for the first wire or the second wire between the lower bracket and the upper bracket; and
a plurality of reinforcing ribs disposed between the upper bracket and the lower bracket.

3. The lumbar support of claim 1, further comprising first to third tension springs elastically supporting the support panel with respect to a seat back frame,
wherein the first tension spring is fastened between a side of an upper portion of the support panel and the seat back frame,
the second tension spring is fastened between the other side of the upper portion of the support panel and the seat back frame to correspond to the first tension spring, and
the third tension spring is fastened between a center of a lower end of the support panel and the seat back frame to elastically support the lower end of the support panel against tension of the first and second wires.

4. The lumbar support of claim 1, wherein the actuator includes:
a driving motor;
a worm fitted on a driving shaft of the driving motor;
a transmission gear engaged with the worm; and
a worm wheel engaged with the transmission gear to receive power and rotate with the tow wheel,
wherein the transmission gear includes:
a first gear engaged with the worm to receive power; and
a second gear engaged with the worm wheel to transmit power,
wherein a gear ratio of the second gear to the first gear is less than 1.

5. The lumbar support of claim 1, wherein the first and second wire guide grooves spirally extend around the circumferential surface.

6. The lumbar support of claim 5, wherein a plurality of locking protrusions is repeatedly formed on bottom sides, with which the first and second wires come in contact, inside the first and second wire guide grooves, and
the locking protrusions extend in a direction perpendicular to a winding direction of the first and second wires.

7. The lumbar support of claim 1, wherein the first wire guide groove spirally extends toward a center in the thickness direction from a side in the thickness direction of the tow wheel, and
wherein the second wire guide groove spirally extends toward the center in the thickness direction from an opposite side in the thickness direction of the tow wheel.

8. The lumbar support of claim 1, wherein the tow wheel has:
a first wire socket groove formed on a surface in the thickness direction of the tow wheel to insert and fix a first wire socket at an end of the first wire; and
a second wire socket groove formed on an opposite surface in the thickness direction of the tow wheel to insert and fix a second wire socket at an end of the second wire.
